# EUROPÄISCHE PATENTSCHRIFT

(11) **EP 1 608 819 B1**
(45) Veröffentlichungstag und Bekanntmachung des Hinweises auf die Patenterteilung: **09.05.2007**
(21) Anmeldenummer: 04722150.2
(22) Anmeldetag: 20.03.2004
(51) Int. Cl.: E02F 9/22, B60K 25/00, B60W 10/00

(54) **ANTRIEBSSTRANG FÜR EIN MOBIL-FAHRZEUG UND VERFAHREN ZUM STEUERN DES ANTRIEBSSTRANGS**
DRIVE TRAIN FOR A MOBILE VEHICLE AND METHOD FOR CONTROLLING SAID DRIVE TRAIN
ENSEMBLE MOTEUR POUR VEHICULE AUTOMOBILE, ET PROCEDE POUR COMMANDER UN TEL ENSEMBLE MOTEUR

(30) Priorität: 28.03.2003 DE 10314334
(43) Veröffentlichungstag der Anmeldung: 28.12.2005
(73) Patentinhaber: ZF FRIEDRICHSHAFEN AG, 88038 Friedrichshafen (DE)
(72) Erfinder: AUMANN, Bernd, 88279 Amtzell (DE)
(86) Internationale Anmeldenummer: PCT/EP2004/002940
(87) Internationale Veröffentlichungsnummer: WO 2004/085752

(56) Entgegenhaltungen:
- DE-A- 10 057 085
- DE-A- 19 521 458
- US-B1- 6 173 513
- LATOUR C ET AL: "FAHRANTRIEB UND ARBEITSHYDRAULIK FUER EINEN RADLADER" OLHYDRAULIK UND PNEUMATIK, KRAUSSKOPF VERLAG FUR WIRTSCHAFT GMBH. MAINZ, DE, Bd. 44, Nr. 5, Mai 2000 (2000-05), Seiten 310,312-314,316, XP000937277 ISSN: 0341-2660
- BECK J: "MOBILE LADEGERAETE HYDRAULISCH ANTREIBEN/ELEKTRONISCH STEUERN" OLHYDRAULIK UND PNEUMATIK, KRAUSSKOPF VERLAG FUR WIRTSCHAFT GMBH. MAINZ, DE, Bd. 42, Nr. 2, 1. Februar 1998 (1998-02-01), Seiten 95-99, XP000751929 ISSN: 0341-2660

## Beschreibung

Die Erfindung bezieht sich auf einen Antriebsstrang für ein Mobil-Fahrzeug nach der im Oberbegriff von Anspruch 1 näher definierten Art, und ein Verfahren zum Steuern eines Antriebsstrangs gemäß dem Oberbegriff des Anspruchs 2. Ein solcher Antriebsstrang und ein solches Verfahren sind aus DE 195 21 458 A1 bekannt.

Gattungsgemäße Antriebsstränge werden insbesondere bei Arbeitsmaschinen, wie beispielsweise Radlader, Grader oder Staplern, eingesetzt. Hierbei treibt eine Antriebsmaschine über einen hydrodynamischen Drehmomentwandler und ein nachgeschaltetes Lastschaltgetriebe die Antriebsräder des Fahrzeugs an. Ebenso treibt die Antriebsmaschine einen Nebenabtrieb für die hydraulische Pumpe der Arbeitshydraulik an. Ist vom Fahrer beabsichtigt, beispielsweise die Schaufel des Radladers zu heben und langsam an einen Lastkraftwagen heranzufahren, so betätigt er gleichzeitig die Betriebsbremse und das Gaspedal, um die Drehzahl der Antriebsmaschine für die hydraulische Pumpe zu erhöhen und über die Betriebsbremse die Fahrgeschwindigkeit zu reduzieren. Die hierbei in den hydrodynamischen Drehmomentwandler eingeleitete Leistung wird in Wärme umgewandelt.

Die DE 195 21 458 A1 offenbart eine elektrohydraulische Steuervorrichtung für den Antrieb einer Maschine, bei welcher zwischen dem Antriebsmotor und dem Pumpenlaufrad des hydrodynamischen Drehmomentwandlers eine Kupplung angeordnet ist, welche durch Betätigen eines weiteren Pedals im Öffnungssinne aktivierbar ist. Um die Drehzahl der Antriebsmaschine zu erhöhen, betätigt der Fahrer das Gaspedal, und um gleichzeitig die Geschwindigkeit zu reduzieren, betätigt der Fahrer ein weiteres Pedal, mit welchem diese Kupplung im Öffnungssinne betätigt wird. Da der Fahrer gleichzeitig noch die Arbeitshydraulik und gegebenenfalls die Lenkung betätigen muß, ist es für den Fahrer äußerst schwierig, die gewünschte Geschwindigkeit zum Heranfahren zu halten.

Der vorliegenden Erfindung liegt die Aufgabe zugrunde, einen Antriebsstrang für ein Mobil-Fahrzeug oder ein Verfahren zum Steuern eines Antriebsstrangs für ein Mobil-Fahrzeug, insbesondere einer Arbeitsmaschine mit einem Nebenabtrieb zum Antrieb der Arbeitshydraulik, zu schaffen, bei welchem der Fahrer entlastet wird.

Die Aufgabe wird mit einem, auch die kennzeichnenden Merkmale des Anspruchs 1 aufweisenden, gattungsgemäßen Antriebsstrang für ein Mobil-Fahrzeug und mit einem Verfahren nach Anspruch 2 gelöst.

Erfindungsgemäß betätigt der Fahrer nicht ein Gaspedal, um die Antriebsmaschine anzusteuern, sondern erzeugt mit dem Fahrpedal Signale, welche einer elektronischen Steuereinheit zugeführt werden, und welche einem Geschwindigkeitswunsch des Fahrzeugs entsprechen. Gleichzeitig erkennt die elektronische Steuereinheit, ob ein Wählhebel für die Ansteuerung der Arbeitshydraulik betätigt ist. Je nach Zustand des Wählhebels für die Arbeitshydraulik steuert die elektronische Steuereinheit die Kupplung, welche die Antriebsmaschine mit dem Pumpenlaufrad des hydrodynamischen Drehmomentwandlers verbindet, an. Ist der Wählhebel für die Arbeitshydraulik nicht betätigt, so erkennt die elektronische Steuereinheit, dass ausschließlich der Fahrantrieb aktiviert sein soll. In diesem Zustand ist vorzugsweise die Kupplung geschlossen und das Fahrzeug wird auf der durch das Fahrpedal vorgegebenen Geschwindigkeit gehalten.

In einer weiteren Ausgestaltungsform kann hierbei die Antriebsmaschine und das nachgeschaltete Untersetzungsgetriebe, vorzugsweise ein lastschaltbares Getriebe, so angesteuert sein, dass sich der hydrodynamische Drehmomentwandler, die Antriebsmaschine und das Lastschaltgetriebe in einem optimalen Wirkungsgradbereich befinden. Ebenso kann in diesem Zustand eine Wandlerüberbrückungskupplung, welche das Turbinenrad mit der Antriebsmaschine verbindet, je nach Betriebszustand angesteuert werden. Je nach Stellung des Fahrpedals stellt sich der Antriebsstrang auf die neue Geschwindigkeit ein.

In einer weiteren Ausgestaltungsform besteht die Möglichkeit, die Beschleunigung des Fahrpedals mit aufzunehmen und in Abhängigkeit dieser Beschleunigung den Antriebsstrang anzusteuern.

In einer weiteren Ausgestaltungsform besteht die Möglichkeit, die Betriebsbremse bei starker Rücknahme der Stellung des Fahrpedals zu aktivieren, um das Fahrzeug zusätzlich abzubremsen.

Wird nun der Wählhebel für die Arbeitshydraulik betätigt, erkennt die elektronische Steuereinheit, dass die hydraulische Pumpe der Arbeitshydraulik ausreichend Fördermenge fördern soll. Hierfür wird die Antriebsmaschine auf eine Mindestdrehzahl angehoben, welche die hydraulische Pumpe benötigt. Die Drehzahl kann auch von der Stellung des Wählhebels abhängig sein. Würde das Fahrzeug mit dieser angehobenen Drehzahl der Antriebsmaschine die durch das Fahrpedal vorgegebene Fahrgeschwindigkeit überschreiten, aktiviert die elektronische Steuereinheit die Kupplung, welche die Antriebsmaschine mit der Pumpenradwelle des hydrodynamischen Drehmomentwandlers verbindet, im Öffnungssinne und öffnet diese so weit, dass das Fahrzeug die vorgegebene Geschwindigkeit nicht überschreitet. Befindet sich das Fahrzeug bei seiner maximalen Leistung und der Wählhebel wird betätigt, so wird ebenfalls die Kupplung im Öffnungssinne betätigt, wobei sich das Fahrzeug unterhalb der vorgegebenen Fahrgeschwindigkeit befindet.

In einer weiteren Ausgestaltungsform wird das Lastschaltgetriebe dergestalt angesteuert, dass die Übersetzung des Lastschaltgetriebes sich vergrößert, um ausreichend Zugkraft aufrechtzuerhalten. Vorzugsweise geschieht dies, wenn zusätzlich zur Betätigung des Wählhebels das Fahrpedal in Richtung größere Fahrgeschwindigkeit bewegt wird.

Indem das Fahrpedal ausschließlich Signale für die Fahrgeschwindigkeit des Fahrers erzeugt, besteht die Möglichkeit, die Leistung der Antriebsmaschine bedarfsabhängig zwischen der Arbeitshydraulik und dem Fahrantrieb aufzuteilen. Ebenso wird ein zusätzlicher manueller Eingriff des Fahrers durch das Beschleunigen des Fahrzeugs, beispielsweise beim Hub der Ladeschaufel, dem sogenannten Ladebetrieb, überflüssig. Der Fahrer wird wesentlich entlastet. Ebenso besteht die Möglichkeit, das Fahrzeug mit optimiertem Kraftstoffverbrauch zu betreiben.

Erfindungsgemäß besteht somit die Möglichkeit, beispielsweise mit einem Radlader an einen Lastkraftwagen heranzufahren, den Wählhebel der Arbeitshydraulik zu betätigen und das Fahrpedel in Richtung geringere Geschwindigkeit zurückzunehmen. Hierbei würde die Antriebsmaschine in ihrer Drehzahl erhöht, was ein schnelles Anheben der Schaufel ermöglicht und das Fahrzeug würde gleichzeitig ohne zusätzliches Betätigen weiterer Pedale in seiner Geschwindigkeit verringert.

Der Wechsel vom Gaspedal zum Fahrpedal ermöglicht eine exaktere Erkennung des Fahrerwunsches in bezug auf den Fahrantrieb und somit einen weiteren Schritt der Verbesserung von fahrstrategischen Konzepten. Automatische, bremsunterstützende Rückschaltungen bzw. Hochschaltverhinderungen können mit weniger manuellen Eingriffen des Fahrers situationsangepasst, von einer intelligenten Steuereinheit zur Verfügung gestellt werden.

Weitere Merkmale sind der Figuren-Beschreibung zu entnehmen.

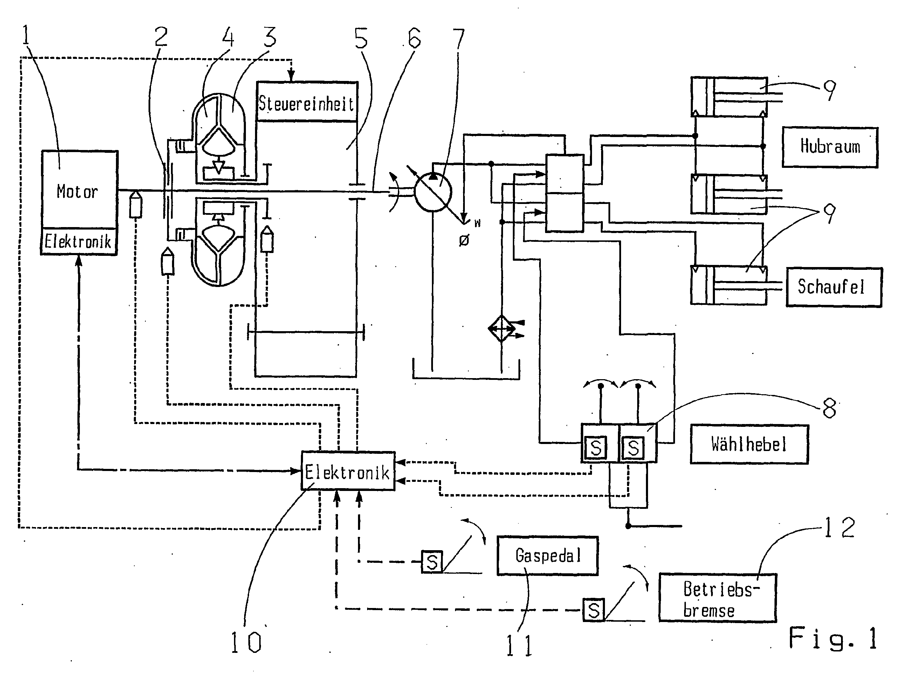

Die einzige Figur zeigt eine Antriebsmaschine 1, welche über eine Kupplung 2 ein Pumpenlaufrad 3 eines hydrodynamischen Drehmomentwandlers antreibt. Das Turbinenrad 4 treibt ein Lastschaltgetriebe 5 an. Die Antriebsmaschine 1 treibt zusätzlich einen Nebenabtrieb 6 an, welcher eine hydraulische Pumpe 7 der Arbeitshydraulik antreibt. Durch Betätigen der Wählhebel 8 wird Volumenstrom der hydraulischen Pumpe 7 zu den Verbrauchern 9, beispielsweise der Schaufel eines Radladers, geleitet. Die hydraulische Pumpe 7 kann eine Load-Sensing-Pumpe sein. Eine elektronische Steuereinheit 10 erhält Signale von dem Wählhebel 8 sowie von einem Fahrpedal 11 und einem Betriebsbremspedal 12. Ebenso erhält die elektronische Steuereinheit Signale von Sensoren für die Drehzahl der Antriebsmaschine 1, die Betätigung der Kupplung 2 sowie der Drehzahl des Lastschaltgetriebes 5. Wird mit dem Fahrpedal 11 eine Fahrgeschwindigkeit eingestellt und gleichzeitig der Wählhebel 8 betätigt, so stellt die elektronische Steuereinheit 10 die Antriebsmaschine 1 auf eine Mindestdrehzahl ein. Würde die Fahrgeschwindigkeit, welche durch das Fahrpedal 11 eingestellt ist, überschritten, so wird die Kupplung 2 im Öffnungssinne so weit betätigt, dass die Fahrzeuggeschwindigkeit der vorgegebenen Geschwindigkeit durch das Fahrpedal 11 entspricht. Sollte dies nicht ausreichen, besteht die Möglichkeit, dass die elektronische Steuereinheit 10 zusätzlich eine Betriebsbremse ansteuert.

### Bezugszeichen

- 1: Antriebsmaschine
- 2: Kupplung
- 3: Pumpenlaufrad
- 4: Turbinenrad
- 5: Lastschaltgetriebe
- 6: Nebenabtrieb
- 7: hydraulische Pumpe
- 8: Wählhebel
- 9: Verbraucher
- 10: elektronische Steuereinheit
- 11: Fahrpedal
- 12: Betriebsbremspedal

## Patentansprüche

1. Antriebsstrang für ein Mobil-Fahrzeug mit einer Antriebsmaschine (1), welche einerseits über einen hydrodynamischen Drehmomentwandler ein schaltbares Untersetzungsgetriebe (5) für den Fahrantrieb und andererseits einen Nebenabtrieb (6) zum Antrieb einer hydraulischen Pumpe (7) für eine Arbeitshydraulik antreibt, wobei ein Pumpenlaufrad (3) des hydrodynamischen Drehmomentwandlers über eine Kupplung (2) mit der Antriebsmaschine (1) in Verbindung steht, **dadurch gekennzeichnet, dass** ein Signal eines Wählhebels (8) für die Arbeitshydraulik und ein Signal eines Fahrpedals (11) für den Fahrantrieb einer elektronischen Steuereinheit (10) zugeführt wird und die elektronische Steuereinheit die Antriebsmaschine (1) und die Kupplung (2) dergestalt ansteuert, dass, je nach Stellung des Fahrpedals (11), eine Fahrgeschwindigkeit und, je nach Stellung des Wählhebels (8), eine Drehzahl des Nebenabtriebs (6) eingestellt wird.

2. Verfahren zum Steuern eines Antriebsstrangs für ein Mobil-Fahrzeug mit einer Antriebsmaschine (1), welche einerseits über einen hydrodynamischen Drehmomentwandler ein schaltbares Untersetzungsgetriebe (5) für den Fahrantrieb und andererseits einen Nebenabtrieb (6) zum Antrieb einer hydraulischen Pumpe (7) für eine Arbeitshydraulik antreibt, wobei ein Pumpenlaufrad (3) des hydrodynamischen Drehmomentwandlers über eine Kupplung (2) mit der Antriebsmaschine (1) in Verbidung steht, **dadurch gekennzeichnet, dass** ein Signal eines Wählhebels (8) für die Arbeitshydraulik und ein Signal eines Fahrpedals (11) für den Fahrantrieb einer elektronischen Steuereinheit (10) zugeführt wird und die elektronische Steuereinheit die Antriebsmaschine (1) und die Kupplung (2) dergestalt ansteuert, dass, je nach Stellung des Fahrpedals (11), eine Fahrgeschwindigkeit und, je nach Stellung des Wählhebels (8), eine Drehzahl des Nebenabtriebs (6) eingestellt wird.

3. Verfahren zum Steuern eines Antriebsstrangs nach Anspruch 2, **dadurch gekennzeichnet, dass** beim Betätigen des Wählhebels (8) bei geschlossener Kupplung (2) die Kupplung (2) so weit im Öffnungssinne betätigt wird, dass der Nebenabtrieb (6) eine definierte Drehzahl erreicht.

4. Verfahren zum Steuern eines Antriebsstrangs nach Anspruch 2, **dadurch gekennzeichnet, dass** beim Betrieb der Antriebsmaschine (1) unterhalb der maximalen Leistung und geschlossener Kupplung (2) und anschließendem Betätigen des Wählhebels (8) die Kupplung (2) so weit im Öffnungssinne betätigt und die Antriebsmaschine (1) so angesteuert wird, dass der Nebenabtrieb (6) eine definierte Drehzahl erreicht und die Fahrgeschwindigkeit der Stellung des Fahrpedals (11) entspricht.

5. Verfahren zum Steuern eines Antriebsstrangs nach Anspruch 2, **dadurch gekennzeichnet, dass** beim Betrieb der Antriebsmaschine (1) bei der maximalen Leistung und geschlossener Kupplung (2) und anschließendem Betätigen des Wählhebels (8) die Kupplung (2) so weit im Öffnungssinne betätigt und die Antriebsmaschine (1) so angesteuert wird, dass der Nebenabtrieb (6) eine definierte Drehzahl erreicht und die Fahrgeschwindigkeit bei steigendem Fahrwiderstand reduziert wird.

6. Verfahren zum Steuern eines Antriebsstrangs nach Anspruch 2, **dadurch gekennzeichnet, dass** beim Betätigen des Wählhebels (8) und Betätigen des Fahrpedals (11) in Richtung geringerer Geschwindigkeit die Drehzahl der Antriebsmaschine (1) angehoben wird.

7. Verfahren zum Steuern eines Antriebsstrangs nach Anspruch 6, **dadurch gekennzeichnet, dass** die Fahrgeschwindigkeit durch Betätigen der Betriebsbremse reduziert wird.

8. Verfahren zum Steuern eines Antriebsstrangs nach Anspruch 2, **dadurch gekennzeichnet, dass** beim Betätigen des Wählhebels (8) und Betätigen des Fahrpedals (11) in Richtung höherer Geschwindigkeit die Drehzahl des Nebenabtriebs (6) angehoben und das Schaltgetriebe (5) in Richtung größerer Übersetzung verstellt wird.

## Claims

1. The invention relates to a drivetrain for a mobile vehicle with a driving engine (1), which on the one hand via a hydrodynamic torque converter drives a shifting intermediate transmission (5) for propulsion and on the other hand drives an auxiliary drive (6) for the drive of a hydraulic pump (7) for working hydraulics, with a pump impeller (3) of the hydrodynamic torque converter being connected to the driving engine (1) via a clutch (2), **characterized in that** a signal of a selector lever (8) is supplied for the working hydraulics and a signal of a gas pedal (11) is supplied for the propulsion of an electronic control unit (10) and the electronic control unit controls the driving engine (1) and the clutch (2) in such a way that, depending on the position of the gas pedal (11), a driving speed and, depending on the position of the selector lever (8), a speed of the auxiliary drive (6) is set.

2. A method for the control of a drivetrain for a mobile vehicle with a driving engine (1), which on the one hand via a hydrodynamic torque converter drives a shifting intermediate transmission (5) for propulsion and on the other hand drives an auxiliary drive (6) for the drive of a hydraulic pump (7) for working hydraulics, with a pump impeller (3) of the hydrodynamic torque converter being connected to the driving engine (1) via a clutch (2), **characterized in that** a signal of a selector lever (8) is supplied for the working hydraulics and a signal of a gas pedal (11) is supplied for the propulsion of an electronic control unit (10), and the electronic control unit controls the driving engine (1) and the clutch (2) in such a way that, depending on the position of the gas pedal (11), a driving speed and, depending on the position of the selector lever (8), a speed of the auxiliary drive (6) is set.

3. A method for the control of a drivetrain according to claim 2, **characterized in that** with activation of the selector lever (8) while the clutch (2) is closed, the clutch (2) is opened to such an extent that the auxiliary drive (6) reaches a defined speed.

4. A method for the control of a drivetrain according to claim 2, **characterized in that** operation of the driving engine (1) below maximum performance with the clutch (2) closed and actuation of the selector lever (8) result in the clutch (2) being opened to such an extent and the driving engine (1) being controlled in such a way that the auxiliary drive (6) reaches a defined speed and the driving speed corresponds to the position of the gas pedal (11).

5. A method for the control of a drivetrain according to claim 2, **characterized in that** operation of the driving engine (1) at maximum performance with the clutch (2) closed and actuation of the selector lever (8) result in the clutch (2) being opened to such an extent and the driving engine (1) being controlled in such a way that the auxiliary drive (6) reaches a defined speed and the driving speed is reduced with increasing road resistance.

6. A method for the control of a drivetrain according to claim 2, **characterized in that** actuation of the selector lever (8) and the gas pedal (11) for lower speed results in the speed of the driving engine (1) being raised.

7. A method for the control of a drivetrain according to claim 6, **characterized in that** the driving speed is reduced through activation of the service brake.

8. A method for the control of a drivetrain according to claim 2, **characterized in that** actuation of the selector lever (8) and the gas pedal (11) for higher speed results in the speed of the auxiliary drive (6) and the ratio of the intermediate transmission (5) being raised.

## Revendications

1. Chaîne cinématique pour un véhicule mobile doté d'une machine d'entraînement (1), entraînant, d'un côté, par l'intermédiaire d'un convertisseur de couple hydrodynamique, un réducteur couplable (5) pour un groupe propulseur, et d'autre côté une prise de mouvement (6) pour l'entraînement d'une pompe hydraulique (7) pour un système hydraulique de translation, sachant qu'une roue de pompe (3) du convertisseur de couple hydrodynamique est liée par un embrayage (2) à la machine d'entraînement (1), **caractérisée en ce que** un signal du levier de sélection (8) pour le système hydraulique de translation et un signal d'une pédale d'accélérateur (11) pour le groupe propulseur sont amenés à une unité de commande électronique (10), et **en ce que** l'unité de commande électronique pilote la machine d'entraînement (1) et l'embrayage (2) de telle manière que, en fonction de la position de la pédale d'accélérateur (11) il est possible de régler la vitesse de déplacement et, en fonction de la position du levier de sélection (8) le régime de la prise de mouvement (6).

2. Méthode de commande d'une chaîne cinématique pour un véhicule mobile doté d'une machine d'entraînement (1), entraînant, d'un côté, par l'intermédiaire d'un convertisseur de couple hydrodynamique, un réducteur couplable (5) pour un groupe propulseur, et d'autre côté une prise de mouvement (6) pour l'entraînement d'une pompe hydraulique (7) pour un système hydraulique de translation, sachant qu'une roue de pompe (3) du convertisseur de couple hydrodynamique est liée par un embrayage (2) à la machine d'entraînement (1), **caractérisée en ce que** un signal d'un levier de sélection (8) pour le système hydraulique de translation et un signal d'une pédale d'accélérateur (11) pour le groupe propulseur sont amenés à une unité de commande électronique (10), et **en ce que** l'unité de commande électronique pilote la machine d'entraînement (1) et l'embrayage (2) de telle manière que, en fonction de la position de la pédale d'accélérateur (11) il est possible de régler la vitesse de déplacement et, en fonction de la position du levier de sélection (8) le régime de la prise de mouvement (6).

3. Méthode de commande d'une chaîne cinématique selon la revendication 2, **caractérisée en ce que** lors de l'actionnement du levier de sélection (8) vec embrayage fermé (2) l'embrayage (2) est actionné en sens d'ouverture usqu'à ce que la prise de mouvement (6) atteigne un régime défini.

4. Méthode de commande d'une chaîne cinématique selon la revendication 2, **caractérisée en ce que** lors du fonctionnement de la machine d'entraînement (1) avec une puissance inférieure à la puissance maximale et avec embrayage fermé (2) et l'actionnement successif du levier de sélection (8), l'embrayage (2) est actionné en sens d'ouverture et la machine d'entraînement (1) est pilotée de telle manière et jusqu'à ce que la prise de mouvement (6) atteigne un régime défini et la vitesse de déplacement corresponde à la position de la pédale d'accélérateur (11).

5. Méthode de commande d'une chaîne cinématique selon la revendication 2, **caractérisée en ce que** lors du fonctionnement de la machine d'entraînement (1) avec la puissance maximale et avec embrayage fermé (2) et l'actionnement successif du levier de sélection (8), l'embrayage (2) est actionné en sens d'ouverture et la machine d'entraînement (1) est pilotée de telle manière et jusqu'à ce que la prise de mouvement (6) atteigne un régime défini et la vitesse de déplacement est réduite avec l'augmentation de la résistance à l'avancement.

6. Méthode de commande d'une chaîne cinématique selon la revendication 2, **caractérisée en ce que** lors de l'actionnement du levier de sélection (8) et l'actionnement de la pédale d'accélérateur (11), pour réduire la vitesse de déplacement, le régime de la machine d'entraînement (1) est augmenté.

7. Méthode de commande d'une chaîne cinématique selon la revendication 6, **caractérisée en ce que** la vitesse de déplacement est réduite en actionnant le frein de service.

8. Méthode de commande d'une chaîne cinématique selon la revendication 2, **caractérisée en ce que** lors de l'actionnement du levier de sélection (8) et l'actionnement de la pédale d'accélérateur (11), pour augmenter la vitesse, le régime de la prise de mouvement (6) est augmenté et la boîte mécanique (5) est réglée afin d'obtenir un rapport de transmission plus long.
